# EUROPÄISCHE PATENTSCHRIFT

(11) **EP 3 996 839 B1**
(45) Veröffentlichungstag und Bekanntmachung des Hinweises auf die Patenterteilung: **28.08.2024**
(21) Anmeldenummer: 20739659.9
(22) Anmeldetag: 10.07.2020
(51) Int. Cl.: B01J 20/26, B01J 20/28, B01J 20/30, B01D 15/08, C08J 3/14

(54) **VERFAHREN ZUR HERSTELLUNG EINES PORÖSEN, AUF EINEM KUNSTSTOFF-POLYMER-BASIERENDEN MATERIALELEMENTS UND DESSEN VERWENDUNG ALS ADSORBENS**
METHOD FOR PRODUCING A POROUS, PLASTICS-POLYMER-BASED MATERIAL ELEMENT, AND THE USE THEREOF AS AN ADSORBENT
PROCÉDÉ DE FABRICATION D'UN ÉLÉMENT DE MATÉRIAU POREUX À BASE DE POLYMÈRE PLASTIQUE ET SON UTILISATION COMME ADSORBANT

(30) Priorität: 11.07.2019 DE 102019118857
(43) Veröffentlichungstag der Anmeldung: 18.05.2022
(73) Patentinhaber: Integro GmbH, 77761 Schiltach (DE)
(72) Erfinder: BOSCH, Raphael, 78554 Aixheim (DE)
(74) Vertreter: Witte, Weller & Partner Patentanwälte mbB
(86) Internationale Anmeldenummer: PCT/EP2020/069563
(87) Internationale Veröffentlichungsnummer: WO 2021/005212

(56) Entgegenhaltungen:
- EP-A1- 3 327 070
- EP-A2- 0 370 260
- CN-A- 106 674 553
- GB-A- 1 436 466
- JP-A- S62 270 631
- US-A- 4 110 529
- US-A- 4 444 961
- US-B1- 6 767 460

## Beschreibung

Die vorliegenden Erfindung betrifft ein Verfahren zur Herstellung eines porösen, auf einem Kunststoff-Polymer-basierenden Materialelements und dessen Verwendung als Adsorbermaterial für Abwasser oder Gewässer.

Die (Trink-)Wasseraufbereitung bzw. Wasserreinigung, wie bspw. von Gewässern und Abwässern, stellt heutzutage eine immer größere Herausforderung dar, da Abwässer immer stärker mit darin gelösten Stoffen, wie bspw. Hormonen, Antibiotika etc., belastet sind, die sich in herkömmlichen Wasseraufbereitungsanlagen bzw. -verfahren nur schwer, wenn überhaupt, entfernern lassen.

Dabei wird unter "Wasserreinigung" im Allgemeinen die Reinigung von Wasser von jeglicher Art von Unreinheiten, wie zum Beispiel Verschmutzungen oder Mikroorganismen verstanden. Die Wasserreinigung umfasst dabei nicht einen einzelnen Schritt, sondern stellt einen viele Teilschritte umfassenden Prozess dar. Welche Teilschritte benötigt werden, hängt von den Verunreinigungen im Wasser ab, die je nach Art des Wassers sehr unterschiedlich sein können.

Im Stand der Technik sind verschiedene Verfahren zur Wasserreinigung bzw. -aufbereitung bekannt, wobei diese Verfahren auch kombiniert, d.h. in Folge eingesetzt werden, um Wasser von Verunreinigungen und/oder Schadstoffen zu befreien.

Neben mechanischen Aufbereitungen, wie Rechen, Sieben, Filtern, werden auch physikalische Verfahren wie Sedimentation, Adsorption, und chemische Verfahren wie Oxidation, lonenaustausch, und Elektrodenionisation eingesetzt, sowie auch biologische Verfahren, bei welchen Bakterien störende Verbindungen im Wasser mikrobiologisch abbauen.

Insbesondere Wasserfilter spielen bei der Wasserreinigung eine große Rolle. Partikel wie Trübstoffe bzw. Mikroorganismen oder unerwünschte im Wasser gelöste Substanzen zu entfernen oder ihre Konzentration zu senken. Dabei unterscheidet man allgemein zwischen Filtern, die rein mechanisch sieben, und solchen, die chemischphysikalisch arbeiten, um gelöste Substanzen zu entfernen.

Mittels der ersten Filtergruppe, zu welchen bspw. Kies-, Stein-, Metall- oder Sandfilter zählen, werden im Wesentlichen partikuläre Inhaltsstoffe abgetrennt, die für ein Passieren von Membranen zu groß sind.

Im Wasser gelöste Stoffe werden hingegen im Falle von organischen Substanzen durch Adsorption, bspw. an Aktivkohle, oder, im Falle von Ionen, durch lonenaustausch aus dem Wasser entfernt.

Aktivkohle ist dabei ein Sammelname für eine Gruppe von künstlich hergestellten, porösen Kohlenstoffen mit einer schwammartigen Struktur, die sich durch eine große spezifische Oberfläche auszeichnet. Im Wasser gelöste organische Substanzen bzw. Schadstoffe adsorbieren an Aktivkohle und reinigen das Wasser dadurch. Zur Reinigung kann entweder pulverförmige Aktivkohle eingesetzt werden, die gründlich mit Wasser vermischt und später wieder abfiltriert und entsorgt wird, oder aber in Form von Kornkohle oder Presslingen, die in Adsorberbehälter eingesetzt werden, durch welche der zu reinigende Wasserstrom hindurch geleitet wird.

Die Aktivkohlefiltration wird in der Regel als vierte Behandlungsstufe in Kläranlagen nachgeschaltet, um Spurenstoffe aus dem Zulauf in Flüsse zu eliminieren. Mittels Aktivkohle lassen sich u.a. Chlor, Ozon, Medikamentenrückstände, Hormone, Pestizide, Pflanzenschutzmittel, Geschmacksstoffe u.a. Stoffe aus dem Wasser entfernen.

Üblicherweise erfolgt die Wasserreinigung in Kläranlagen dreistufig, wobei in der ersten Reinigungsstufe auf mechanischem Weg, also bspw. durch Gitter, Siebe und Sandfang, etwa 30 % der Schmutzstoffe entfernt werden; in der zweiten Reinigungsstufe werden organische Stoffe durch den Einsatz von diese abbauende Bakterien und Algen weiter abgebaut; in dem nach dieser Stufe entstandenen Schlamm können durch Zugabe chemischer Stoffe, die mit den verunreinigenden Subtanzen reagieren, zahlreiche Schadstoffe gebunden werden. Anschließend erfolgt die Weiterbehandlung des "gereinigten" Wassers, also die vierte Stufe, sowie die Schlammbehandlung und -beseitigung.

Die Herstellung von Aktivkohle ist allerdings Material- Zeit und Energieaufwändig, wodurch deren Gebrauch zur Wasserreinigung teuer ist und deren Herstellung auch aus ökologischen Gesichtspunkten Nachteile aufweist. So muss für die Herstellung von Aktivkohle zunächst kohlenstoffreiches Pflanzenmaterial (wie Holz, Torf, Braunkohle, etc.) unter Ausschluss von Sauerstoff bei bis zu 900°C verbrannt (also verkohlt) werden, wodurch Poren im Material entstehen. Anschließend muss das Material noch Gas- oder chemisch aktiviert werden, wodurch die Oberfläche der Aktivkohle weiter vergrößert wird.
GB1436466 A offenbart ein Verfahren zur Herstellung pulverförmiger Polyamid Adsorbermaterialien.

Vor diesem Hintergrund wäre es wünschenswert, Mittel bereitzustellen, mit denen bspw. Aktivkohle ersetzt und damit die Nachteile des Standes der Technik überwunden werden können.

Erfindungsgemäß wird diese Aufgabe gelöst durch ein Verfahren zur Herstellung eines porösen, auf einem Kunststoff-Polymer-basierenden Materialelements wie in den Ansprüchen definiert.

Die Aufgabe wird ferner gelöst durch die Verwendung des erfindungsgemäß hergestellten porösen Materialelements.

Die der Erfindung zugrunde liegende Aufgabe wird auf diese Weise vollkommen gelöst.

Mittels des erfindungsgemäßen Verfahren können Materialelemente hergestellt werden, die aufgrund ihrer herausragenden adsorbierenden Eigenschaften vielfältig einsatzbar sind, insbesondere bzw. unter anderem in der Gewässerreinigung, in fermentativen Prozessen und/oder als Ionenaustauscher nach ggf. weitere Funktionalisierung. Im Rahmen der vorliegenden Erfindung wurde ein Verfahren entwickelt, mit Hilfe dessen Polymere, insbesondere auch Polymer-Abfall-/Ausschuss- oder Recyclingprodukte einer neuen Verwendung zugeführt werden können: Das zur Verfügung gestellte Kunststoff-Polymer, das vorzugsweise ein Kunststoff-Polymer ist, das als Abfall-/Ausschuss- oder recyceltes Produkt bereitgestellt wird, kann in einer wässrigen anorganischen oder organischen Säure derart gelöst werden, dass sich eine viskose Lösung bildet. Diese viskose Lösung wird erfindungsgemäß dann derart in ein flüssiges Fällungsmedium überführt, dass das Materialelement in Form einer bestimmten Struktur ausfällt. Das dadurch erhaltene Materialelement, das bspw. die Form von Tropfen, Kugeln/Kügelchen, Fasern, eines Schwammes, oder einer Folie oder Membran aufweist, besitzt aufgrund des erfindungsgemäßen Lösungs- und Fällungsverfahrens eine Porosität, die einen vielfältigen Einsatz der gewonnenen Materialelemente erlaubt: Aufgrund der Porenstruktur, deren Durchmesser sich im Bereich von zwischen 0,01 µm und bis ca. 500 µm bewegt, - und dies konnte im Rahmen der vorliegenden Erfindung nachgewiesen werden, können vorteilhafterweise Stoffe, wie chemische oder mikrobielle Verunreinigungen, aus Wasser/Gewässern an die Materialelemente adsorbieren und aus dem Wasser/Gewässer entfernt werden.

Gegenüber herkömmlichen Verfahren, bei welchen Kunststoff-Partikel einem aufwändigen und separaten Funktionalisierungsschritt zur OberflächenVergrößerung unterzogen werden, bietet das erfindungsgemäße Verfahren dagegen gerade den Vorteil, dass die Funktionalisierung direkt mit der Herstellung der Materialelemente erreicht wird. Kosten-, Zeit- und Energieaufwändige Zusatzschritte werden dadurch vermieden, da Herstellung und Strukturgebung in einem Prozess verlaufen können.

Dadurch finden die erfindungsgemäß hergestellten Materialelemente nicht nur Einsatz als Adsorbermaterial in Reinigung von Gewässern - bspw. in Form von Filtern, die aus den Materialelementen zusammengesetzt sind oder diese aufweisen.

Vorliegend wird unter einem "Kunststoff-Polymer" jeder synthetische, durch Polyreaktion industriell oder im Labormaßstab hergestellte chemische Stoff verstanden, der aus Makromolekülen besteht, und aus einer oder mehreren Struktureinheiten (Monomeren) aufgebaut ist.

Da Kunststoff-Polymere heutzutage in den verschiedensten Industrien eingesetzt werden, existieren einerseits viele Kunststoff-Polymer-Produkte, die entweder Ausschuss- oder verbrauchte Waren darstellen, oder sogar überschüssiges Polymer-Ausgangsmaterial, das nicht für das ursprünglich vorgesehene Endprodukt eingesetzt, sondern verworfen wird. Diese Materialien/Produkte, können entweder direkt oder im recycelten oder modifizierten Zustand vorteilhafterweise in dem erfindungsgemäßen Verfahren eingesetzt werden.

Unter "Materialelement" ist vorliegend jeder Festkörper, gleich welcher Form, gemeint, der mit dem erfindungsgemäßen Herstellungsverfahren in Schritt c) ausgefällt wird, und der - je nach Ausführung von Schritt c) - eine bestimmte feste Form mit poröser Oberfläche aufweist.

Gemäß einer bevorzugten Ausführungsform ist dabei das Kunststoff-Polymer, ausgewählt aus der Gruppe umfassend: Polyamid-6, Polyamid-6.6, Polyamid-12, Polyamid-4.6, Polyamid-11.

Polyamide zählen zu den wichtigsten technischen Thermoplasten, und stellen zähe Materialien mit hoher Festigkeit und Steifigkeit, sowie guter Abrieb- und Veschleißfestigkeit dar. Aufgrund dieser Eigenschaften werden sie daher in den verschiedensten Industrien - z.T. auch als Ersatz von Metallteilen - eingesetzt. Die wichtigsten Anwendungsgebiete für thermoplastische Polyamide liegen in der Elektrotechnik, im Maschinen- und Apparatebau, Fahrzeugbau, Verpackungssektor, bei Haushaltsgeräten und Verbrauchsartikeln. So finden Polyamide im Fahrzeugbau, wo sie oftmals auch Glasfaserverstärkt eingesetzt werden, ihren Einsatz - bspw. in Lampengehäusen, starren Kraftstoffleitungen und -Tanks, Gas- und Kupplungspedalen, aber auch als Strukturbauteile, wie beispielsweise Karosserieteile bei Fahrzeugen, sowie im Maschinen-/Apparatebau als Zahnräder, Gleitlager, Haushaltsgeräte-Teile, Dübel, elektrotechnische Artikel, Rohre und Leitungssysteme, Heizöltanks, Reißverschlüsse, Angelschnüre, Kabelummantelungen und Tüten.

Darüber hinaus wird Polyamid-12-Pulver zum Rapid Prototyping durch Lasersinterung verwendet. Polyamid-RIM, ein Blockcopolymer mit Nylon, lässt sich nach dem Reaktionsgießverfahren (RIM = Reaction Injection Molding) verarbeiten und wird ebenfalls für die Herstellung von Prototypen eingesetzt. Polyamid-6 und Polyamid-12 sind mit etwas höherer Molmasse auch als Gusstypen verfügbar.

Dieser universelle Einsatz von Polyamiden - wie auch anderen Kunststoff-Polymeren - führt zum einen zu einem großen Verbrauch dieser Thermoplasten, was wiederum einerseits zu Ausschuss-/Verbrauchs-Produkten oder überschüssigem Ausgangs-Polyamid-Material führt. Überschüssige oder verbrauchte Polyamid-Produkte, bzw. nicht-eingesetztes Polyamid-ausgangsmaterial, wie bspw. Polyamid-Pulver, oder recycelte Polyamid-Materialien können daher vorteilhafterweise in dem erfindungsgemäßen Verfahren einfach eingesetzt werden.

Gemäß einer bevorzugten Ausführungsform ist die anorganische Säure ausgewählt aus Schwefelsäure, Salpetersäure, Salzsäure.

Dabei beträgt gemäß der Erfindung das Verhältnis des Kunststoff-Polymers zu der anorganischen oder organischen Säure in Schritt b) zumindest ca. 20 g/L bis ca. 500 g/L.

Dies bedeutet, dass von ca. 20 Gramm (g) des Kunststoff-Polymers bis ca. 500 Gramm (g) des Kunststoff-Polymers auf einen Liter (L) der anorganischen oder organischen Säure eingesetzt werden, um die gelöstes Kunststoff-Polymer aufweisende anorganische-/organische-Säure-Kunststoff-Polymerlösung herzustellen.

Insbesondere ist bevorzugt, wenn ca. 30 g/L, 40 g/L, 50 g/L, 60 g/L, 70 g/L, 80 g/L, 90 g/L, 100 g/L, 110 g/L, 120 g/L, 130 g/L, 140 g/L ,150 g/L, 160 g/L, 170 g/L, 180 g/L, 190 g/L, 200 g/L, 250 g/L, 300 g/L, 350 g/L, 400 g/L, 450 g/L als Verhältnis angesetzt werden.

Es versteht sich dabei, dass mit steigendem Anteil des Kunststoff-Polymers dabei die in Schritt b) gewonnene anorganische-/organische-Säure-Kunststoff-Polymerlösung zähflüssiger/viskoser wird. Die Viskosität kann dabei in Rücksicht auf Schritt c), d.h. die Ausfällung, und die hierzu eingesetzte Überführungsmaßnahme abgestimmt werden.

Gemäß einer weiteren Ausführungsform beträgt die Konzentration der wässrigen anorganischen oder organischen Säure wenigstens ca. 5%, und max. ca. 99%. Gemäß bevorzugten Ausführungsformen ist die anorganische oder organische Säure wenigsten 30%-ig, 40%-ig, 50%-ig, 60%-ig, 70%-ig, 80%-ig, 90%-ig, 96%-ig, 98%-ig.

Ferner ist gemäß einer weiteren Ausführungsform des erfindungsgemäßen Verfahrens bevorzugt, wenn das Verhältnis des Fällungsmediums zu der anorganischen-/organischen-Säure-Kunststoff-Polymerlösung in Schritt c) zumindest ca. 2:1 und höchstens 50:1, vorzugsweise 10:1 beträgt.

Dies bedeutet, dass in Schritt c) zumindest zwei Teile an Fällungsmedium auf einen Teil der anorganischen-/organischen-Säure-Kunststoff-Polymerlösung eingesetzt werden, um das Materialelement auszufällen. Gemäß bevorzugten Ausführungsformen ist das Verhältnis dabei mindestens 3:1, 4:1, 5:1, 6:1, 7:1, 8:1, 9:1, 10:1, 11:1, 12:1, 13:1, 14:1, 15:1, 16:1, 17:1, 18:1, 19:1, 20:1, 25:1, 30:1, 35:1, 40:1, 45:1.

In einer Ausführungsform des erfindungsgemäßen Verfahren ist dabei vorgesehen, wenn Schritt b) unter Erhitzen und/oder Rühren erfolgt, wobei zum Erhitzen vorzugsweise eine Temperatur eingesetzt wird, die von zwischen ca. 30°C bis ca. 150°C, insbesondere bei ca. 35°C, 40°C, 45°C, 50°C, 55°C, 60°C, 65°C, 70°C, 75°C, 80°C, 85°C, 90°C, 95°C, 100°C, 110°C, 120°C, 130°C, 140°C, und jeweils max. 150°C liegt.

Je nach eingesetztem Kunststoff-Polymer und dessen angesetzten Verhältnis zu der anorganischen/organischen Säure kann es wünschenswert sein, das Kunststoff-Polymer schneller bzw. überhaupt in der Säure dadurch zu lösen, dass das Gemisch erhitzt und/oder unter Rühren gelöst wird.

Gemäß der vorliegenden Erfindung ist das Fällungsmedium ausgewählt aus reinem Wasser, Leitungswasser, vollentsalztem Wasser, bidestillliertem Wasser.

Im Rahmen der vorliegenden Erfindung konnte gezeigt werden, dass bereits der Einsatz von Leitungswasser ausreichend ist, um den Fällungsschritt vorzunehmen.

In dem erfindungsgemäßen Verfahren und für das erfindungsgemäße Materialelement ist bevorzugt, wenn das poröse, auf einem Kunststoff-Polymer-basierenden Materialelement eine Form aufweist, die ausgewählt ist aus im Wesentlichen kugelförmig, tropfenförmig, schwammartig, faserig, und fadenartig.

Dabei kann die Form des Materialelements in Abhängigkeit der Viskosität der in Schritt b) erhaltenen anorganische-/organische-Säure-Kunststoff-PolymerLösung, dem Fällungsmedium und/oder dem Modus der Überführung eingestellt werden, um eine gewünschte Form zu erhalten.

Gemäß des erfindungsgemäßen Verfahrens wird das Überführen der anorganischen-/organischen-Säure-Kunststoff-Polymerlösung ins flüssige Fällungsmedium in Schritt c) portionsweise bewirkt, und wird vorzugsweise bewirkt durch zumindest eines der folgenden: Eintropfen der anorganischen/organischen-Säure-Kunststoff-Polymerlösung in das flüssige Fällungsmedium, Einfließen der anorganischen/organischen-Säure-Kunststoff-Polymerlösung in das flüssige Fällungsmedium, Eintauchen der anorganischen/organischen-Säure-Kunststoff-Polymerlösung in das flüssige Fällungsmedium.

Dabei bedeutet "portionsweise", dass nicht die gesamte anorganische/organische-Säure-Kunststoff-Polymerlösung in einem Vorgang in das Fällungsmedium überführt wird, sondern nur eine "Portion" der anorganischen/organischen-Säure-Kunststoff-Polymerlösung, bzw. ein "Teil" davon, dessen Menge einstellbar ist und von der gewünschten Form des Materialelements abhängt.

Die aufgeführten Überführungs-Schritte bzw. -Alternativen können mittels verschiedener Hilfsgeräte durchgeführt werden, wie bspw. Trichter, Schläuche, wobei die Fließ-/Tropfgeschwindigkeit der anorganischen/organischen-Säure-Kunststoff-Polymerlösung über den Durchmesser und/oder Klemmen oder andere mechanische Hilfsmittel eingestellt und beeinflusst werden kann.

Das Fällungsmedium befindet sich dabei in einem Gefäß, in welches beim Schritt des Eintropfens oder des Einfließens die anorganische/organische-Säure-Kunststoff-Polymerlösung eingetropft bzw. eingeflossen wird, bspw. dadurch, dass über dem das Fällungsmedium enthaltenden Gefäß ein weiteres Gefäß angebracht wird, aus dem die darin vorliegende anorganische/organische-Säure-Kunststoff-Polymerlösung bspw. über Schläuche, Trichter, und/oder Klemmen portionsweise in das Fällungsmedium-Gefäß überführt wird.

Gemäß einer bevorzugten Ausführungsform wird in Schritt c) das Fällungsmedium während oder nach dem Überführen der anorganischen/organischen-Säure- -Kunststoff-Polymerlösung in das Fällungsmedium mit Lauge neutralisiert wird.

Vorteilhafterweise wird dadurch erreicht, dass eine pH-neutrale bzw. handhabungs-technisch unbedenkliche Lösung bereitgestellt wird.

In einer Ausführungsform des erfindungsgemäßen Verfahrens und für das erfindungsgemäße Materialelement ist bevorzugt, wenn das in Schritt c) gebildete auf einem Kunststoff Polymer-basierenden Materialelement eine im wesentlichen Kugelform aufweist, mit einem Durchmesser von ca. 1 mm bis ca. 100 mm, vorzugsweise von ca.1,5 mm bis ca. 3,5 mm.

Die Kugelform (bzw. Kügelchenform) kann bspw. durch Eintropfen-lasen der anorganischen/organischen-Säure--Kunststoff-Polymerlösung in das Fällungsmedium erreicht werden, wobei die Größe der erreichten Kugeln von der zugeführten Menge abhängen wird. Vorteilhafterweise fällen die Kugeln direkt in Kontakt mit dem Fällungsmedium aus und sammeln sich am Boden eines das Fällungsmedium enthaltenden Gefäßes.

Ferner weist gemäß einer bevorzugten Ausführungsform das auf einem Kunststoff-Polymer-basierende Materialelement Poren mit einer Größe von zwischen ca. 0,01 µm und bis ca. 500 µm auf, vorzugsweise von zwischen 0,5 µm und 200 µm, 0,5 µm bis 100 µm und 1 µm bis 100 oder 200 µm.

Vorteilhafterweise umfasst das mittels des erfindungsgemäßen Verfahrens hergestellt Materialelement dabei Poren mit unterschiedlichem Durchmesser, die sich im Nanometer- bis Mikrometer-Bereich bewegen. Je poröser - bzw. je kleiner und damit zahlreicher die Poren darauf - das Materialelement ist, desto größer ist dessen Adsorptions-Kapazität. Dabei ist aber gerade auch eine Mischung von größeren und kleineren Poren in dem oben genannten Bereich von Vorteil, wenn der Einsatz des Materialelements bspw. zur Aufreinigung von Gewässern erfolgen soll, die unterschiedlich große, verunreinigende und an das Materialelement zu adsorbierende Stoffe enthalten.

In einer Weiterbildung des erfindungsgemäßen Verfahrens ist bevorzugt, wenn das Bereitstellen des Kunststoff-Polymers in Schritt a) das Bereitstellen eines ein Kunststoff-Polymer umfassenden Abfallmaterials bzw. Gebrauchsgegenstands umfasst.

Wie weiter oben erwähnt bietet das erfindungsgemäße Verfahren den Vorteil, dass das Ausgangsmaterial für die Herstellung des Materialelements nicht - bspw. im Gegensatz zu Aktivkohle - aufwändig hergestellt werden muss, sondern aus bereits vorhandenen Materialien/Produkten hergestellt werden kann.

Dabei kann auf Kunststoff-Polymer-Produkte, egal ob gebraucht (= Abfall) oder ungebraucht (Überschuss/fehlerhafte Produkte) zurückgegriffen werden, oder auf bereits überschüssiges oder anderweitig nicht mehr einsetzbares Kunststoff-Polymer Ausgangsmaterial für Endprodukte, sowie auf Verbundwerkstoffe wie weiter oben erwähnt, ohne dass diese Verbundwerkstoffe in ihre einzelnen Komponenten zerlegt werden müssten.

Entsprechend ist bei einer Ausführungsform bevorzugt, wenn das Bereitstellen des Kunststoff-Polymers in Schritt a) den Schritt des Zerkleinerns eines das Kunststoff-Polymer umfassenden Materials umfasst.

Mittels eines Zerkleinerungs-Schritts kann das Kunststoff-Polymer im nachfolgenden Lösungsschritt ggf. schneller und einfacher gelöst werden. Als Maßnahmen/Mittel zum Zerkleinern können bspw. Zerkleinerer, Schredder und/oder Mühlen eingesetzt werden.

Ferner ist in einer anderen Ausführungsform bevorzugt, wenn das in Schritt a) bereitgestellte Kunststoff-Polymer in einer Form bereitgestellt wird, die ausgewählt ist aus pulverförmig, streifen- oder fadenförmig, kugelförmig.

So können bspw. Abfall-Ausgangsmaterialien, bzw. anderweitig nicht mehr verwendbare Ausgangsmaterialien von Kunststoff-Polymeren eingesetzt werden, wie bspw. Kunststoff-Polymer-Pulver-Abfälle aus Lasersintern.

Erfindungsgemäß umfasst das erfindungsgemäße Verfahren den zusätzlichen Schritt c1), bei welchem nach dem Lösungsschritt b) und vor dem Überführungsschritt c) die Oberflächenspannung des flüssigen Fällungsmittels gebrochen wird.

Erfindungsgemäß wird die Oberflächenspannung des flüssigen Fällungsmittels mittels eines Tensids gebrochen, bspw. einem handelsüblichen Spülmittel.

Die vorliegende Erfindung betrifft auch die Verwendung des mittels des erfindungsgemäßen Verfahrens hergestellten porösen, auf einem Kunststoff-Polymer-basierenden Materialelements.

Das mittels des erfindungsgemäßen Verfahrens hergestellte Materialelement kann erfindungsgemäß als Adsorbermaterial oder Reinigung von Abwasser, Gewässern, eingesetzt werden.

Das erfindungsgemäß zu reinigende "Gewässer" kann dabei bspw. jedes Abwasser aus Industrie/Krankenhäusern/Haushalten/Landwirtschaft etc. sein, und allgemein Abwasser darstellen, das Kläranlagen zugeführt wird, oder aber direktes Fluss-/Bach-/Meer- oder sonstiges Wasser, das einem Reinigungsprozess unterzogen werden soll.

Die erfindungsgemäße Verwendung des Materialelements zur Reinigung von Gewässern kann bspw. auch als vierter Schritt in Kläranlagen als Alternative zur Aktivkohle eingesetzt werden, wie einleitend für die Aktivkohle bzw. allgemein für Kläranlagen erläutert.

Alternativ kann das erfindungsgemäße Verfahren auch direkt, sozusagen als erste Stufe, zum Reinigen von Gewässern wie Bächen, Flüssen, Seen, Meeren, eingesetzt werden, was insbesondere vorteilhaft in entlegenen, Gebieten ist, in denen das Verbrauchswasser/Gewässer nicht von Kläranlagen zuvor gereinigt wird.

Die Substanzen, die das Wasser verunreinigen und von denen das Wasser befreit werden soll, sind bspw. organische und/oder mikrobielle Verunreinigungen, bspw. Chlor, Ozon, Medikamentenrückstände, insbesondere Antibiotika, Schmerzmittel, Hormone bzw. Hormonpräparate, Pestizide, Pflanzenschutzmittel, Farb- und Geschmacksstoffe, Lösungsmittel, Viren, u.a. Stoffe. Diese Stoffe können im Wasserkreislauf in Konzentrationen von wenigen ng/L bis hin zu einigen µg/L vorkommen.

Die für die Gewässerreinigung eingesetzten Materialelemente können nach deren erfindungsgemäßem Einsatz recycelt, verbrannt oder anderweitig entsorgt werden. Insbesondere können die Materialelemente - je nach Polarität des zu adsorbierenden Stoffes/der zu adsorbierenden Stoffe - bspw. durch ein unpolares Lösungsmittel (wie bspw. Ethanol) oder ein polares Lösungsmittel wieder regeneriert, also von den Stoffen gereinigt werden, die in/an die Poren adsorbiert haben. Die so regenerierten Materialelemente können dann einem weiteren Einsatz unterzogen werden.

Insgesamt ist gemäß einer bevorzugten Ausführungsform des vorliegenden Verfahrens, der vorliegenden Verwendung und des vorliegenden Materialelements bevorzugt, wenn das Kunststoff-Polymer sortenrein ist, also aus einem einzigen Polymermaterial besteht. Sofern es das Lösungsverhalten von Mischungen zulässt, können auch Kunststoff-Polymer-Mischungen eingesetzt werden.

Wie weiter oben erwähnt, kann das Wasserfilter direkt aus den Materialelementen bestehen, oder aus einem diese umfassenden Behältnis.

Nachstehend wird die Erfindung anhand der aufgeführten Beispiele und Figuren beispielhaft näher erläutert. Es zeigen:
**Fig. 1** eine Rasterelektronenmikroskop-Aufnahme eines erfindungsgemäß hergestellten Materialelements: Ausgangsmaterial Polyamid 12, selektives lasersintern Abfallpulver, Schwefelsäure 96% (Lösungsmittel), Konzentration: 200g PA12 in 1 Liter Schwefelsäure;
**Fig. 2** eine Rasterelektronenmikroskop-Aufnahme eines weiteren erfindungsgemäß hergestellten Materialelements: Ausgangsmaterial Polyamid 12, selektives lasersintern Abfallpulver, Schwefelsäure 96% (Lösungsmittel), Konzentration: 120g PA12 in 1 Liter Schwefelsäure; und
**Fig. 3** Rasterelektronenmikroskop-Aufnahmen eines noch weiteren erfindungsgemäß hergestellten Materialelements: Ausgangsmaterial Polyamid 6, Angelschnur, Salzsäure 18% (Lösungsmittel), Konzentration: 120g PA6 in 1 Liter Salzsäure, mit zwei unterschiedlichen Vergrößerungen (A) und (B).

### Beispiele

### Versuch 1

In einem ersten Schritt (a) wurde thermisch vorbelastetes Polyamid-12-Abfallpulver vom selektiven Lasersintern bereitgestellt. Dieses wurde in einem zweiten Schritt (b) mit zwischen 100 und 120 Gramm mechanisch mit 1 Liter 96%iger Schwefelsäure in einem Becherglas solange vermischt, bis eine milchige, gleichmäßige Lösung entstand.

Gemäß einer Ausführungsform der vorliegenden Erfindung kann der Lösevorgang durch Temperaturerhöhung und zusätzlichem Rührer beschleunigt werden.

Ein zweites Becherglas wurde mit Fällungsmittel (Wasser) befüllt (Verhältnis Fällungsmittel zur Kunststofflösung ca. 10:1), und um die Oberflächenspannung zu brechen, wurden zwei Tropfen Spülmittel (oder auch andere Tenside) hinzugegeben. Das Fällungsmittel wurde mittels Magnetrührer bei ca. 400 rpm zur Strudelbildung in Rotation versetzt.

In einem nächsten Schritt (Schritt c) wurde die Kunststofflösung über einen Scheidetrichter in das Fällungsmittel getropft. Dabei fielen die Tropfen beim Eintreffen in das Fällungsmittel kugelförmig aus.

Das Fällungsmittel kann nach gegebener Zeit mit einer Lauge neutralisiert werden, da der pH-Wert durch die in der Kunststofflösung enthaltene Schwefelsäure über die Zeit abnimmt und zur Lösung der kugelförmigen Kunststoffpartikeln führen kann.

Die bei der Ausfällung entstandenen Kugeln ("Materialelemente") weisen eine sehr poröse Struktur auf, die einen Durchmesser von ca. < 1 µm bis > 100 µm aufweisen und die der Porenstruktur von Aktivkohle sehr ähneln.

Es zeigte sich, dass die Partikelgröße und Form der kugelförmigen Partikel über die Größe der Austrittsöffnung des Scheidetrichters verändert werden kann. Ebenso konnte durch Änderung von Temperatur, Oberflächenspannung, Viskosität, Rührgeschwindigkeit, pH-Wert, Konzentration und allen anderen physikalischen und chemischen Parametern im Fällungsmittel und der Kunststofflösung die Form, Partikelgröße und die Poreneigenschaften (Porengröße, Porenverteilung) verändert werden.

### Versuch 2

Es wurden zwischen 100 und 150 Gramm Angelschnur und Fischernetze aus Polyamid-6 mit 1 Liter 32%iger Salzsäure in einem Becherglas solange vermischt, bis eine gleichmäßige Lösung entstand. Dabei konnte der Lösevorgang durch Temperaturerhöhung und zusätzlichem Rühren beschleunigt werden.

In dem Fall, dass das Ausgangsmaterial (hier: Angelschnur/Fischernetze) Verschmutzungen wie Sand, Algen etc. aufweist, konnte dieses dadurch entfernt werden, dass die Kunststofflösung nach dem Lösevorgang für eine gewisse Zeit stehen gelassen wurde. Dabei wurden Schutzreste wie Sand über Sedimentation entfernt, und organische Verschmutzungen wie z.B. Algenreste in der Salzsäure aufgelöst werden.

Ein zweites Becherglas wurde mit dem entsprechenden Fällungsmittel (Wasser) befüllt (Verhältnis Fällungsmittel zu Kunststofflösung ca. 10:1). Um die Oberflächenspannung zu brechen wurden zwei Tropfen Spülmittel (oder auch andere Tenside) hinzugegeben. Das Fällungsmittel wurde mittels Magnetrührer bei ca. 400 rpm zur Strudelbildung in Rotation versetzt.

Über einen Scheidetrichter wurde die Kunststofflösung in das Fällungsmittel getropft zur Ausfällung tropfenförmiger Kunststoffpartikel ("Materialelemente").

Das Fällungsmittel sollte nach gegebener Zeit mit einer Lauge neutralisiert werden, da der pH-Wert durch die in der Kunststofflösung enthaltenen Salzsäure über die Zeit abnimmt und zur Lösung der kugelförmigen Kunststoffpartikeln führen kann.

Die mittels des erfindungsgemäßen Verfahrens hergestellten Kugeln weisen eine sehr poröse Struktur auf. Die Poren weisen einen Durchmesser von < 1 µm bis > 100 µm auf, und ähneln der Struktur von Aktivkohle damit sehr.

### Versuch 3

Die erfindungsgemäß hergestellten Materialelemente aus Versuch 1 und Versuch 2 wurden im Hinblick auf ihre Adsorptionseigenschaften u.a. durch Zugabe der Materialelemente in mit Metanilgelb-Lösung (mit einer Konzentration von 10 mg/L) (Materialelement aus Versuch 1; mit Ethanol regenerierbar) bzw. in mit wässriger Aurinlösung (Konzentration von 10 mg/L) (Materialelement aus Versuch 2) gefärbtes Wasser getestet. Es zeigte sich, dass nach Zugabe der Materialelemente das Wasser nach einer bestimmten Zeit entfärbt werden konnte, mithin also die im Wasser enthaltenen Farbstoffe (s.o.) an die Materialelemente adsorbierten. (nicht gezeigt)

In einem ähnlichen Versuch konnten organische Stoffe aus einem mit den organischen Stoffen versetzten Wasser entfernt werden.

### Figurenbeschreibung

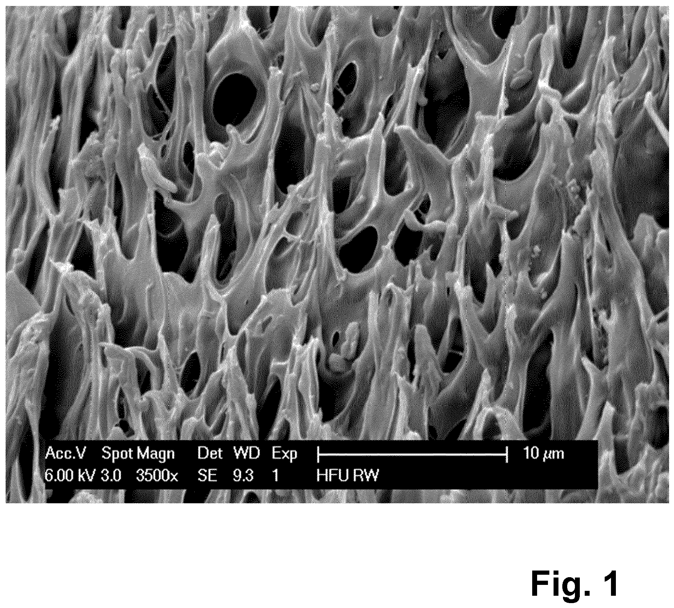

Die Figuren 1 bis 3 zeigen Rasterelektronenmikroskop-Aufnahmen von vier unterschiedlich hergestellten erfindungsgemäßen Materialelementen.

Für die Herstellung des in Figur 1 gezeigten Materialelements wurde als Ausgangsmaterial Polyamid 12 eingesetzt, ein selektives lasersintern Abfallpulver, das in 96%-iger Schwefelsäure unter Rühren gelöst wurde. Dabei wurden 200g des Polyamids PA12 in 1 Liter Schwefelsäure eingesetzt. Ausgefällt wurden wie oben beschrieben in Wasser, zur Herstellung von Polyamid-Kugeln.

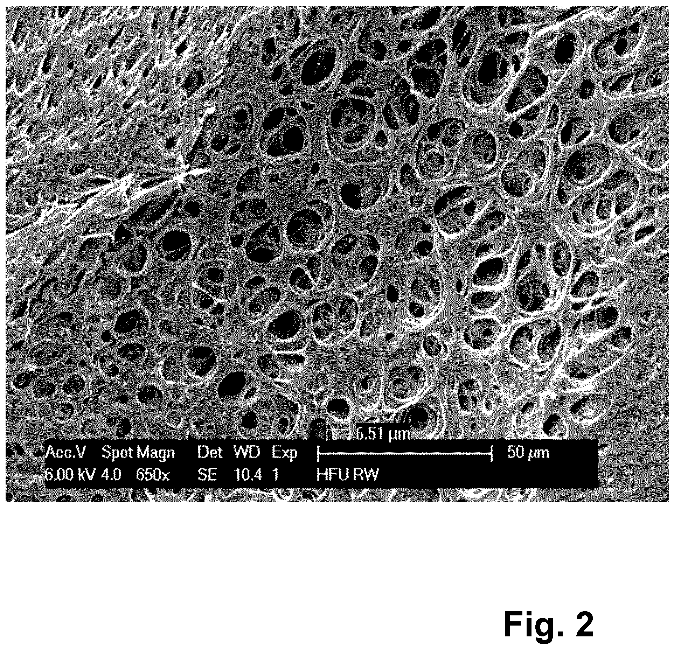

Für die Herstellung des in Figur 2 gezeigten weiteren Materialelements wurde als Ausgangsmaterial Polyamid 12, selektives lasersintern Abfallpulver, eingesetzt, das in 96%-iger Schwefelsäure 96% unter Rühren gelöst wurde. Dabei wurden 120g des Polyamids PA12 in 1 Liter Schwefelsäure gelöst. Ausgefällt wurden wie oben beschrieben in Wasser, zur Herstellung von Polyamid-Kugeln.

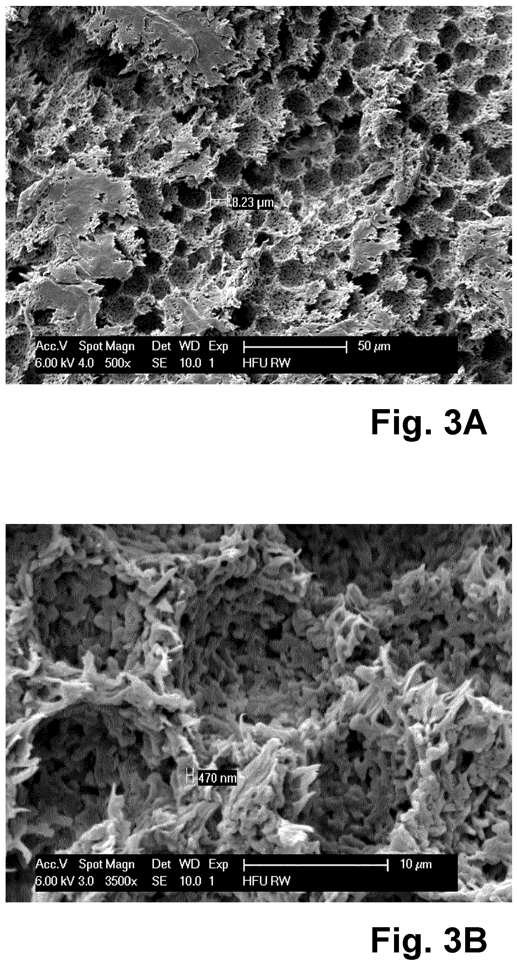

Für die Herstellung des in Figur 3a und 3b gezeigten weiteren Materialelements wurde als Ausgangsmaterial Polyamid 6 (Angelschnur) eingesetzt, das/die in 18%-iger Salzsäure unter Rühren gelöst wurde, mit einer Konzentration von 120g des Polyamids PA6 in 1 Liter Salzsäure. Ausgefällt wurden wie oben beschrieben in Wasser.

Den Aufnahmen ist zu entnehmen, dass die hergestellten Materialelemente Poren mit unterschiedlicher Porengröße aufweisen. Die Poren ermöglichen eine ausgezeichnete Adsorption von Stoffen, die bspw. Gewässer verunreinigen, oder die aus bestimmten Medien an die Materialelemente adsorbieren sollen.

### Zusammenfassung

Mit dem erfindungsgemäßen Verfahren wurden gezielt poröse Mikroplastikteilchen/Materialelemente mit einer großen spezifischen Oberfläche hergestellt, um diese später als Adsorptionsmittel (z.B. als Wasserfilter), zu nutzen. Da sich diese Materialelemente bzw. Mikroplastikpartikel aus Kunststoffmüll herstellen lassen, bietet das erfindungsgemäße Verfahren einen Vorteil gegenüber bspw. Aktivkohle, die in Zei-, Kosten- und Energieaufwändigen Verfahren hergestellt werden muss. Ferner kann Kunststoffmüll einer neuen Verwendung zugeführt werden, und muss nicht teuer und umweltschädlich entsorgen werden.

Mit dem erfindungsgemäßen Verfahren lassen sich Kunststoffabfälle (bspw. vorzugsweise Kunststoffabfälle vom selektiven Lasersintern oder auch andere Abfälle aus Polyamid, wie Angelschnüre und Fischernetze), mit einem chemischen Lösungsmittel auflösen. Bei diesem Verfahren lassen sich gleichzeitig auch noch Verunreinigungen im Ausgangsmaterial abtrennen und entfernen. Das gelöste Kunststoffgemisch wird in ein Fällungsmittel gegeben und fällt dabei als Festkörper/Materialelement wieder aus. Die ausgefällten Festkörper/Materialelemente weisen erfindungsgemäß poröse Strukturen auf und ähneln unter dem Mikroskop einem Schwamm.

Mit dieser (mikro)porösen Struktur wird eine sehr große spezifische Oberfläche erreicht, die damit eine große Adsorptionsfläche für viele Schadstoffe bietet. Zwar hat bspw. Aktivkohle den gleichen Effekt wie die erfindungsgemäß hergestellten Materialelemente, da auch mit Aktivkohle sehr große spezifische Oberflächen erzielt werden. Allerdings wird bei der Herstellung von Aktivkohle viel Energie und Biomasse benötigt, die aus der Natur entnommen werden müssen. Auch kann die Aktivkohle nur begrenzt Schadstoffe aufnehmen und ist nach einer bestimmten Zeit "voll beladen". Die Aktivkohl kann zwar ebenfalls regeneriert werden, dies ist allerdings energetisch sehr aufwendig und teuer, so dass in der Regel die Aktivkohle mit den Schadstoffen meistens in die Verbrennung geht, um die Schadstoffe unschädlich zu machen. Die Masse an Aktivkohle wird dabei - nachteiligerweise - in Form von CO₂ freigesetzt.

Die erfindungsgemäß hergestellten Materialelemente bzw. Kunststoff-partikel haben gegenüber Aktivkohle daher gleich mehrere Vorteile: Diese lassen sich aus Kunststoffabfällen herstellen, und benötigen keine zusätzliche Biomasse. Ferner können voll beladene Materialelemente (also nach deren Einsatz zur GewässerReinigung/lonenaustauscher etc.)) viel weniger aufwendig mit einem Lösemittel regeneriert und gereinigt werden, was eine mehrmalige Anwendung der Materialelemente zulässt.

Ferner kann das sogar das Lösungsmittel mittels Destillation wieder zurückgewonnen werden, wonach lediglich eine aufkonzentrierte "Schadstoffbrühe" verbleibt, die zur Unschädlichmachung der Schadstoffe verbrannt werden kann.

Auch können die Materialelemente, falls deren adsorptive Eigenschaft nach mehrmaliger Anwendung nachlässt, wieder in den Produktionsprozess als Rohmaterial eingespeist werden.

Die erfindungsgemäß hergestellten Materialelemente bieten daher gegenüber den bekannten Reinigungsverfahren und -materialien unschlagbare Vorteile, insbesondere in der Gewässer- und Abwasserreinigung.

## Patentansprüche

1. Verfahren zur Herstellung eines porösen, auf einem Kunststoff-Polymer-basierenden Materialelements, aufweisend die folgenden aufeinanderfolgenden Schritte:
a) Bereitstellen eines Kunststoff-Polymers, wobei das Kunststoff-Polymer ein Polyamid Homo- oder Copolymer ist;
b) Lösen des Kunststoff-Polymers in einer wässrigen anorganischen Säure, die ausgewählt ist aus Schwefelsäure, Salpetersäure, Salzsäure, zur Gewinnung einer gelöstes Kunststoff-Polymer aufweisenden anorganischen -Säure-Kunststoff-Polymerlösung; und
c) Überführen der anorganischen-Säure-Kunststoff-Polymerlösung in ein flüssiges Fällungsmedium, wobei das Fällungsmedium ausgewählt ist aus im Wesentlichen reinem Wasser, Leitungswasser, vollentsalztem Wasser, oder bidestilliertem Wasser, zur Ausfällung und Bildung des auf einem Kunststoff Polymer-basierenden Materialelements,
charakterisiert dadurch, dass das Überführen der anorganischen-Säure-Kunststoff-Polymerlösung in das Fällungsmedium in Schritt c) portionsweise erfolgt; dass das das Verhältnis des Kunststoff-Polymers zu der wässrigen anorganischen Säure in Schritt b) zumindest ca. 20 g/L bis ca. 500 g/L beträgt; dass Schritt b) unter Erhitzen bei einer Temperatur erfolgt, die in einem Bereich von Raumtemperatur bis ca. 150°C liegt;und dass nach dem Lösungsschritt b) und vor dem Überführungsschritt c) die Oberflächenspannung des flüssigen Fällungsmittels mittels eines Tensids gebrochen wird.

2. Verfahren nach Anspruch 1, **dadurch gekennzeichnet, dass** das portionsweise Überführen vorzugsweise bewirkt wird durch zumindest eines der folgenden:
Eintropfen der anorganischen -Säure-Kunststoff-Polymerlösung in das flüssige Fällungsmedium, Einfließen der anorganischen -Säure-Kunststoff-Polymerlösung in das flüssige Fällungsmedium, Eintauchen der anorganischen -Säure-Kunststoff-Polymerlösung in das flüssige Fällungsmedium.

3. Verfahren nach Anspruch 1 oder 2, **dadurch gekennzeichnet, dass** das Polyamid ausgewählt ist ausPolyamid-6, Polyamid-6.6, Polyamid-12, Polyamid-4.6, Poylamid-11.

4. Verfahren nach einem der vorstehenden Ansprüche, **dadurch gekennzeichnet, dass** die wässrige anorganische Säure wenigstens ca. 5%-ig bis 99%-ig ist.

5. Verfahren nach einem der vorstehenden Ansprüche, **dadurch gekennzeichnet, dass** Schritt b) unter Erhitzen bei einer Temperatur erfolgt, die in einem Bereich von zwischen ca. 30°C bis ca. 150°C liegt, und/oder unter Rühren erfolgt.

6. Verfahren nach einem der vorstehenden Ansprüche, **dadurch gekennzeichnet, dass** das poröse, auf einem Kunststoff-Polymer-basierenden Materialelement eine Form aufweist, die ausgewählt ist aus im Wesentlichen kugelförmig, tropfenförmig, schwammartig, faserig, und fadenartig.

7. Verfahren nach einem der vorstehenden Ansprüche, **dadurch gekennzeichnet, dass** in Schritt c) das flüssige Fällungsmedium während oder nach dem Überführen der anorganischen -Säure-Kunststoff-Polymerlösung in das Fällungsmedium mit Lauge neutralisiert wird.

8. Verfahren nach einem der vorstehenden Ansprüche, **dadurch gekennzeichnet, dass** das Bereitstellen des Kunststoff-Polymers in Schritt a) das Bereitstellen eines ein Kunststoff-Polymer umfassenden Abfallmaterials bzw. Gebrauchsgegenstands umfasst; vorzugsweise wobei das Bereitstellen des Kunststoff-Polymers in Schritt a) den Schritt des Zerkleinerns eines das Kunststoff-Polymer umfassenden Materials umfasst; vorzugsweise wobei das in Schritt a) bereitgestellte Kunststoff-Polymer in einer Form bereitgestellt wird, die ausgewählt ist aus Pulver-förmig, Granulat-förmig, Körner-förmig, Streifen-förmig oder Faden-/Faser-förmig, Kugelförmig.

9. Verwendung eines nach einem der Ansprüche 1 bis 8 hergestellten porösen, auf einem Polyamid Homo- oder Copolymer-basierenden Materialelements als Adsorbermaterial zur Reinigung von Abwasser, Gewässern.

## Claims

1. A method for producing a porous plastics-polymer-based material element comprising the following successive steps:
a) providing a plastics-polymer, wherein the plastics-polymer is a polyamide homo- or copolymer;
b) dissolving the plastics-polymer in an aqueous inorganic acid selected from sulfuric acid, nitric acid, hydrochloric acid, to obtain an inorganic acid-plastics-polymer solution comprising dissolved plastics-polymer; and
c) transferring the inorganic acid-plastics-polymer solution into a liquid precipitation medium, wherein the precipitation medium is selected from substantially pure water, tap water, demineralized water, or double distilled water, to precipitate and form the plastics-polymer-based material element,
**characterized in that** the transfer of the inorganic acid-plastics-polymer solution into the precipitation medium in step c) is carried out in portions; **in that** the ratio of the plastics-polymer to the aqueous inorganic acid in step b) is at least 20 g/L to about 500 g/L; **in that** step b) is carried out with heating at a temperature in a range from room temperature to about 150°C; and that after the dissolving step b) and before the transfer step c) the surface tension of the liquid precipitant is broken by means of a surfactant.

2. The method according to claim 1, **characterized in that** the transfer in portions is preferably effected by at least one of the following: dripping the inorganic-acid-plastics-polymer solution into the liquid precipitating medium, flowing the inorganic-acid-plastics-polymer solution into the liquid precipitating medium, immersing the inorganic-acid-plastics-polymer solution in the liquid precipitating medium.

3. The method according to claim 1 or 2, **characterized in that** the polyamide is selected from polyamide-6, polyamide-6.6, polyamide-12, polyamide-4.6, polyamide-11.

4. The method according to one of the preceding claims, **characterized in that** the aqueous inorganic acid is at least about **characterized in that** the aqueous inorganic acid is at least about 5% to 99% .

5. The method according to one of the preceding claims, **characterized in that** step b) is carried out at a temperature, which is in a range of between about 30°C to about 150°C, and /or with stirring.

6. The method according to one of the preceding claims, **characterized in that** the porous plastics-polymer-based material element has a shape selected from substantially spherical, teardrop-shaped, sponge-like, fibrous, and thread-like.

7. The method according to one of the preceding claims, **characterized in that** in step c) the liquid precipitation medium is neutralized with alkali during or after the transfer of the inorganic acid-plastics-polymer solution into the precipitation medium.

8. The method according to any one of the preceding claims, **characterized in that** the providing of the plastics-polymer in step a) comprises the providing of a waste material or article of use comprising a plastics-polymer; preferably wherein the providing of the plastics-polymer in step a) comprises the step of comminuting a material comprising the plastics-polymer; preferably wherein the plastics-polymer provided in step a) is provided in a form selected from powder-shaped, granule-shaped, grain-shaped, strip-shaped or thread/fibre-shaped, ball-shaped.

9. Use of a porous, polyamide homo- or copolymer-based material element produced according to one of claims 1 to 8 as an adsorber material for the purification of waste water, water bodies.

## Revendications

1. Procédé pour la fabrication d'un élément matériel poreux à base de polymère plastique, présentant les étapes successives suivantes :
a) fourniture d'un polymère plastique, dans lequel le polymère plastique est un homopolymère ou copolymère de polyamide ;
b) dissolution du polymère plastique dans un acide inorganique aqueux qui est choisi parmi acide sulfurique, acide nitrique, acide chlorhydrique, pour obtenir une solution acide inorganique-polymère plastique présentant un polymère plastique dissous ; et
c) transfert de la solution acide inorganique-polymère plastique dans un milieu de précipitation liquide, dans lequel le milieu de précipitation est choisi parmi eau sensiblement pure, eau du robinet, eau déminéralisée ou eau bidistillée, pour la précipitation et la formation de l'élément matériel à base de polymère plastique,
**caractérisé en ce que** le transfert de la solution acide inorganique-polymère plastique dans le milieu de précipitation dans l'étape c) est effectué par portions ; **en ce que** le rapport du polymère plastique à l'acide inorganique aqueux dans l'étape b) est d'au moins environ 20 g/l à environ 500 g/l ; **en ce que** l'étape b) est effectuée avec chauffage à une température qui se situe dans une plage allant de la température ambiante à environ 150 °C ; **et en ce qu'**après l'étape de dissolution b) et avant l'étape de transfert c), la tension superficielle de l'agent de précipitation liquide est rompue au moyen d'un tensioactif.

2. Procédé selon la revendication 1, **caractérisé en ce que** le transfert par portions est effectué de préférence par au moins l'un des éléments suivants :
introduction goutte-à-goutte de la solution acide inorganique-polymère plastique dans le milieu de précipitation liquide, introduction de la solution acide inorganique-polymère plastique dans le milieu de précipitation liquide en la laissant couler, immersion de la solution acide inorganique-polymère plastique dans le milieu de précipitation liquide.

3. Procédé selon la revendication 1 ou 2, **caractérisé en ce que** le polyamide est choisi parmi polyamide-6, polyamide-6.6, polyamide-12, polyamide-4.6, polyamide-11.

4. Procédé selon l'une des revendications précédentes, **caractérisé en ce que** l'acide inorganique aqueux va d'au moins environ 5 % à 99 %.

5. Procédé selon l'une des revendications précédentes, **caractérisé en ce que** l'étape b) est effectuée avec chauffage à une température qui se situe dans une plage allant d'environ entre 30 °C à environ 150 °C, et/ou avec brassage.

6. Procédé selon l'une des revendications précédentes,
**caractérisé en ce que** l'élément matériel poreux à base de polymère plastique présente une forme qui est choisie parmi sensiblement sphérique, en forme de goutte, de type éponge, de type fibre et de type fil.

7. Procédé selon l'une des revendications précédentes,
**caractérisé en ce que,** dans l'étape c), le milieu de précipitation liquide est neutralisé avec une solution alcaline pendant ou après le transfert de la solution acide inorganique-polymère plastique dans le milieu de précipitation.

8. Procédé selon l'une des revendications précédentes,
**caractérisé en ce que** la fourniture du polymère plastique à l'étape a) comprend la fourniture d'un déchet ou objet utilitaire comprenant un polymère plastique ; de préférence dans lequel la fourniture du polymère plastique dans l'étape a) comprend l'étape de broyage d'un matériau comprenant le polymère plastique ; de préférence dans lequel le polymère plastique fourni à l'étape a) est fourni sous une forme qui est choisie parmi poudre, granulés, grains, bande ou fil/fibre, sphère.

9. Utilisation d'un élément matériel poreux à base d'homopolymère ou de copolymère de polyamide fabriqué selon l'une des revendications 1 à 8 comme matériau adsorbant pour la purification d'eaux, d'eaux usées.
